# EUROPEAN PATENT APPLICATION

(11) **EP 2 221 558 A1**
(43) Date of publication of application: **25.08.2010**
(21) Application number: 08835784.3
(22) Date of filing: 03.10.2008
(51) Int. Cl.: F24J 2/54, F24J 2/14

(54) **BEAM, METHOD FOR SECURING MIRROR-SUPPORTING ARMS TO THE BEAM, FRAME AND METHOD FOR PRODUCING THE BEAM FORMING PART OF A CYLINDRICAL PARABOLIC SOLAR COLLECTOR**

(30) Priority: 04.10.2007 ES 200702720
(71) Applicant: Albiasa Collector Trough, S.L., 48001 Bilbao (ES)
(72) Inventor: ALBISU, TRISTAN, Jon, 48001 Bilbao (ES); ALGUACIL ALGARRADA, Mario, 48001 Bilbao (ES)
(74) Representative: Carpintero Lopez, Francisco
(86) International application number: PCT/ES2008/000624
(87) International publication number: WO 2009/043955

(57) **Abstract**

The invention relates to a beam, a manner of securing the arms for supporting mirrors to the beam, a frame and a process for manufacturing the beam of a cylindrical parabolic solar collector. The beam (1) of the frame of a cylindrical parabolic solar collector is **characterized in that** the beam is cylindrical, hollow and has a circular cross-section; is formed by two or more profile parts or portions (2), with a length equal to that of the beam, with a cross-section in the form of a circular sector with an angle equal to the full angle divided by the number of parts forming the beam, with flanges (3) having a planar area of radial direction at the two ends; the flanges have made therein holes which coincide when they face one another, to allow the assembly of through elements. Said profile portions are made of sheet metal and are attached to one another by contacting the flanges such that a closed profile is formed, thereby forming a full beam. The manner of securing the arms (5) for supporting the mirrors (7) to the beam (1) is **characterized in that** the arms are assembled to one another in pairs and in turn to the beam (1) with the intermediation of the flanges (3) to which they are secured; the arms of each pair being arranged symmetrically with respect to the flanges and sharing securing elements. The process for manufacturing the profile portions (2) is **characterized in that**: it starts from a strip of sheet metal with a width equal to the length of the neutral fiber of the profile portion to be manufactured; the necessary holes are punched in the flanges; a profiling machine, also known as a cold profile forming machine, wherein the roller trains give the design shape to the profile portion, is fed with the mentioned strip.

## Description

### Field of the Art

The invention mainly relates to the main elements of the structure, the manner of securing them to one another, and the method for manufacturing one of its components, of a cylindrical parabolic solar collector typically used in solar thermal power stations. The sunlight reflected by the mirrors is concentrated in the focal axis of said collector, and a tube through which a fluid circulates is arranged therein. Both the mentioned mirrors and the tube are secured to the frame of the collector. The heat energy stored by said fluid is used to obtain electric power by means of a steam turbine.

Nevertheless, the invention could also be used in other applications in which concentrated sunlight is necessary, such as the concentration photovoltaic, water purification or steam generation application.

### Prior State of the Art

In current solar thermal power stations which use cylindrical parabolic technology, collectors of between 100 and 150 meters in length and about 6 meters in width, divided into modules of about 12 meters in length, are being used. They consist of a mirror channel with a parabolic cross-section in the focal line of which, arranged horizontally, the tube through which the heat transfer fluid circulates is located. The structure must be capable of rotating about an axis parallel to the focal line, in order to be able to direct the axis of the parabola towards the sun at each time of the day. An automatic system is in charge of this movement.

Of the various existing structural schemes, the invention object of this application belongs to the type of structure of central body and arms. In this type of structure, the central body, also known as a torque tube or beam, is located parallel to the parabolic channel, below the vertex of the parabola. The arms are secured to the central body such that they are extended in a cantilevered manner perpendicularly to the axis of the beam. The mission of the arms is to serve as a support for the mirrors.

Up until now the central body has been made by means of two methods for manufacture:
1. Spatial torque tube, formed by a spatial structure of welded and/or screwed structural profile portions. This constructive method gives rise to lightweight and resistant structures but, due to the amount of parts and attachments, it has economic drawbacks in its manufacture and assembly and entails certain technical difficulty in achieving the necessary optical quality. The Eurotrough brand has this constructive scheme.
2. Helical tube with a circular cross-section. It is a tube similar to the one used for fluid conduction. The method for manufacturing it makes it necessary to use a helical weld bead along the entire tube, which makes the subsequent hot galvanization necessary. Both processes give rise to a dimensional and geometric uncertainty in the finished part, which makes additional rectification operations for achieving the necessary optical quality necessary. The helical tube can be found in some models of the manufacturer Solel and in the collector of the manufacturer Sener.

### Description of the Invention

Elements necessary for understanding the technical problem which the invention intends to solve are set forth below.

The efficiency of a cylindrical parabolic collector depends to a great extent on the geometric quality of the reflective optics which are secured to its frame, therefore the cylindrical parabolic shape of the mirrors must be maintained within a certain geometric deviation under all the possible operating conditions. For this reason it is deduced that the structure of the collector must have a certain constructive quality added to a certain mechanical strength.

The main load which the structure must support is that produced by the wind, due to which the central body is subjected to a torsion stress added to another bending stress. The more resistant the central body is to said stresses, especially to torsion, the greater the efficiency of the collector. The helical tube has an optimal torsional strength, however under bending its strength is lower compared to other forms.

From the points of view of the optical quality and the cost-effectiveness of the manufacture, it is preferable for the frame to have the smallest possible number of attachments, especially weld attachments with contribution of material, since their number and size multiply the dimensional uncertainty of the assembly.

The current trend is to build solar thermal power stations which need a large amount of cylindrical parabolic collectors. A typical station may need the installation of about 90,000 linear meters of parabolic channel, from which the need to simplify the design and reduce the manufacturing and assembly times of the structure of the collector as much as possible is deduced.

The description of the invention and its advantages are set forth below.

The first aspect of the invention relates to the beam of the structure of the cylindrical parabolic solar collector, characterized by being cylindrical, hollow and having a circular cross-section; formed by two or more profile parts or portions, with a length equal to that of the beam, with a cross-section in the form of a circular sector with an angle equal to the full angle divided by the number of parts forming the beam, with flanges having a planar area of radial direction in the end angles of the circular sector; the flanges have coincident holes made therein to allow the assembly of through elements. Said profile portions are made of sheet metal and are attached to one another by contacting the flanges such that a closed profile is formed, thereby forming a full beam.

The material can be of galvanized sheet metal cold-formed by means of a profiling machine.

The technique for the attachment between the parts forming the beam will be such that it prevents deformations and such that it does not considerably deteriorate the galvanization layer of the sheet metal. It can be by means of attachment elements such as screws, rivets, clinches or by means of roll or resistance spot welding.

The fact should be observed that if the design is careful, the assembly of the full central body can be achieved with identical parts placed in as many different positions as parts into which the central body is divided, with the consequent production advantages.

The parts of a profile portion will be described below.
- Main area: with a circular or approximately circular shape, it is formed by most of the mass. Its function is to provide internal cohesion to the structure and resist external forces. The shape can change according to whether a different combination of torsional and bending strengths is required, and according to the direction of the forces which generate the bending. In the event of high torsional strength and bending strength in any direction, the shape of the cross-section can be circumferential with the flanges of sufficient dimensions for the assembly. In the event of high torsional strength and certain bending strength with a determined direction, the circumference can be slightly flattened in the bending direction and/or the surface of the flanges of the area of the bending direction can be increased, its shape can be enlarged to a T.
- Flange: with a planar shape, it serves as an assembly face between the profile portions. Given that once the central body is assembled, the flanges are attached two by two, the sheet metal thickness of this area is double, which considerably increases the rigidity. Therefore, the remaining structural elements are assembled in these areas. Furthermore, they provide considerable bending strength to the assembly. Their shape and dimensions can change according to the required bending strength. In the event of assembling the central body by means of attachment elements, it will be necessary to make a series of holes in the flanges for the passage of said elements to be possible. For the assembly of the arms it will be necessary to make holes in the flanges.

The advantages of this central body compared to helical tube models are:
- The method for manufacturing the parts forming it is simpler, less expensive and of a higher dimensional quality.
- The method for assembling the parts forming the central body is simpler and provides sufficient precision without needing to use special positioning tools, or subsequent verification or readjustment.
- The design allows preventing hot galvanization and welding, whereby possible deformations needing subsequent balancing or rectifications are eliminated.
- The presence of the flanges increases the bending strength of the beam.

Another aspect of the invention is the manner of securing the arms for supporting the mirror to the beam, which is characterized by:
- The arms are secured directly to the beam without any intermediate element. The assembly will be carried out on the flanges, in which the holes serving for the passage of the securing elements or screws are made.
- The arms are secured to one another in pairs, and in turn to the central beam with the intermediation of the vertical flanges, such that each pair of coincident supports on both sides of the central body forms a continuous structure, normal to the axis of the beam and symmetrical with respect to the flanges.
- Once the arms are assembled, they fulfill the dual function of supporting the mirrors and closing the beam.

This manner of securing has the following advantages compared to collectors with a helical tube:
- In relation to the beam, the optical quality provided by the arms-beam assembly only depends on the manufacture of the parts forming the central beam and not on any subsequent operation since only the planarity of the flanges and the correct alignment of the holes made therein have an influence.
- There is a decrease in the number of parts with respect to models with a helical tube since the arms are secured directly to the central body without any intermediate part or support, and each arm shares attachment elements with the arm to which it is paired.
- The stresses in the beam-arm attachment areas decrease considerably.

Another aspect of the invention is the method for manufacturing beam profile portions. The process is described below:
- Starting from a strip of galvanized sheet steel, it is cut until the width of length coinciding with the length of the development of the profile portion to be manufactured.
- The strip is placed in the head of the tandem of automatic cutting-punching and profiling machines. It will serve as a continuous feed to said machines.
- The length of each rectangle of sheet metal is cut according to the length of the structural module. The necessary holes are punched.
- The sheet metal, still planar, continues until the profiling machine, also known as a cold profile forming machine with rollers for profiles which, equipped with the specific tools, will give it the definitive shape.
- The punching can be carried out before or after profiling, according to the manufacturer's equipment.

The advantages offered by this method for manufacture with respect to that of the models described in the State of the Art section are the following:
- With respect to that of the helical tube, this method offers a higher dimensional quality and shorter manufacturing times, since it prevents subsequent galvanization and balancing processes.
- The manufacturing tools are inexpensive and long-lasting.

### An Embodiment

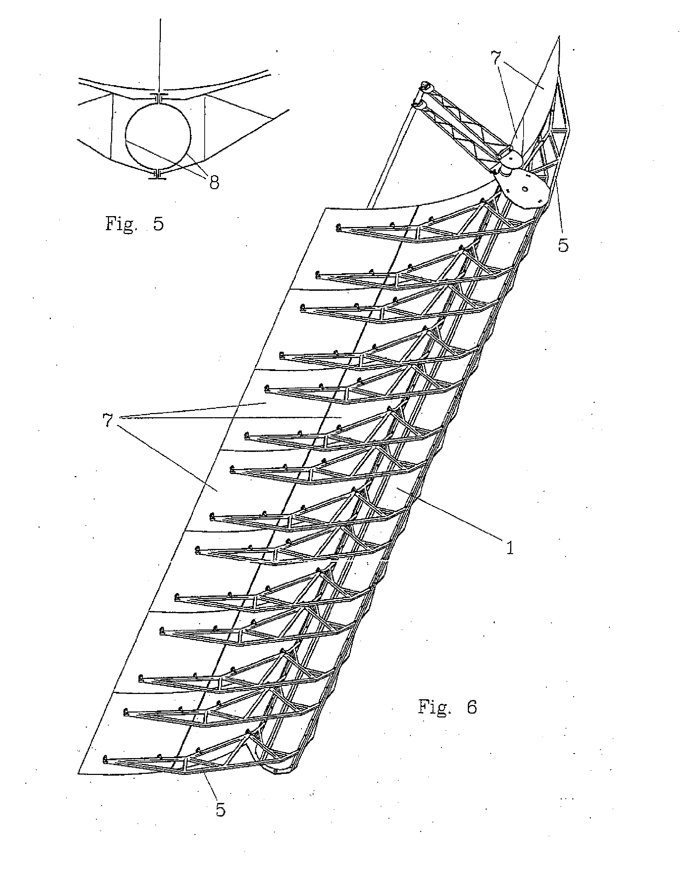

An embodiment of the invention considered to be the most feasible one is set forth below. It is the one depicted in all the figures and it is in Figure 5 in which it has a real depiction.

It is a frame of about 12 meters in length belonging to a cylindrical parabolic collector of about 150 meters in length, the beam (1) of which is formed by 4 identical profile quarters (2) of galvanized sheet metal with a thickness of 3 millimeters, with flanges (3) enlarged to a "T" shape to increase the bending strength, attached by means of high-strength screws and nuts.

The arms (5) for supporting the mirrors (7) are of a welded hollow structural tube, with a square cross-section, and galvanized under hot conditions, and are secured with screws and nuts to the opposite arm and to the beam.

The process for manufacturing the profile quarters is as follows:
- Starting from a strip of galvanized sheet steel, it is cut until the width of length coinciding with the length of the development of the profile portion to be manufactured.
- The strip is placed in the head of the tandem of automatic cutting-punching and profiling machines. It will serve as a continuous feed to said machines.
- Once the sheet metal is unwound, the length of each rectangle of sheet metal is cut according to the length of the structural module.
- The necessary holes are punched.
- The sheet metal, still planar, continues until the profiling machine, also known as a cold profile forming machine with rollers for profiles which, equipped with the specific tools, will give it the definitive shape.

### Brief Description of the Drawings

A brief description of the drawings which illustrate an embodiment of a cylindrical parabolic collector the beam or central body and the manner of securing the arms of which are according to the described embodiment is set forth below.

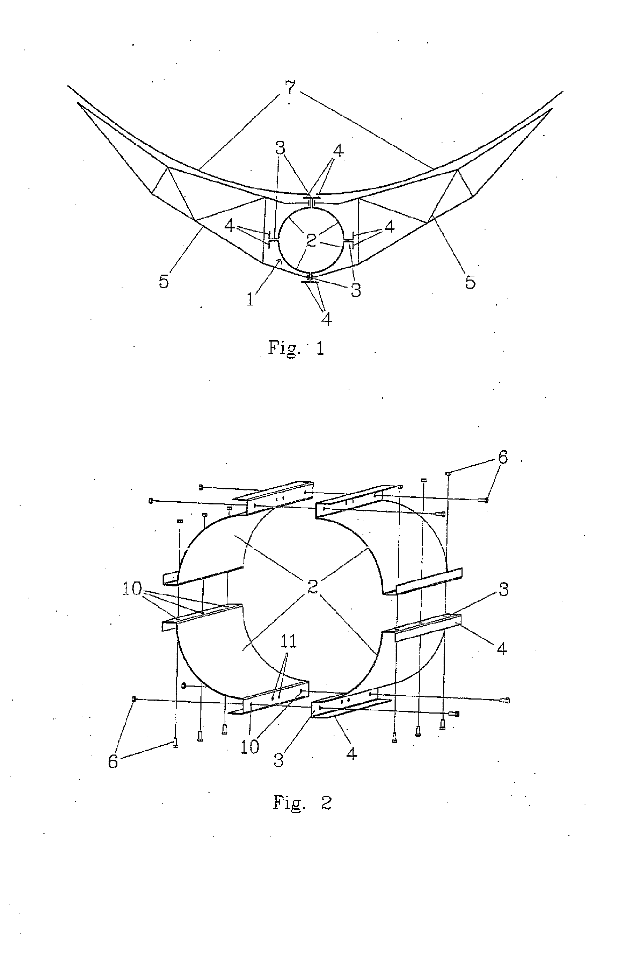

Figure 1 depicts in a simplified manner a profile view of a frame of a collector with the mirrors assembled.

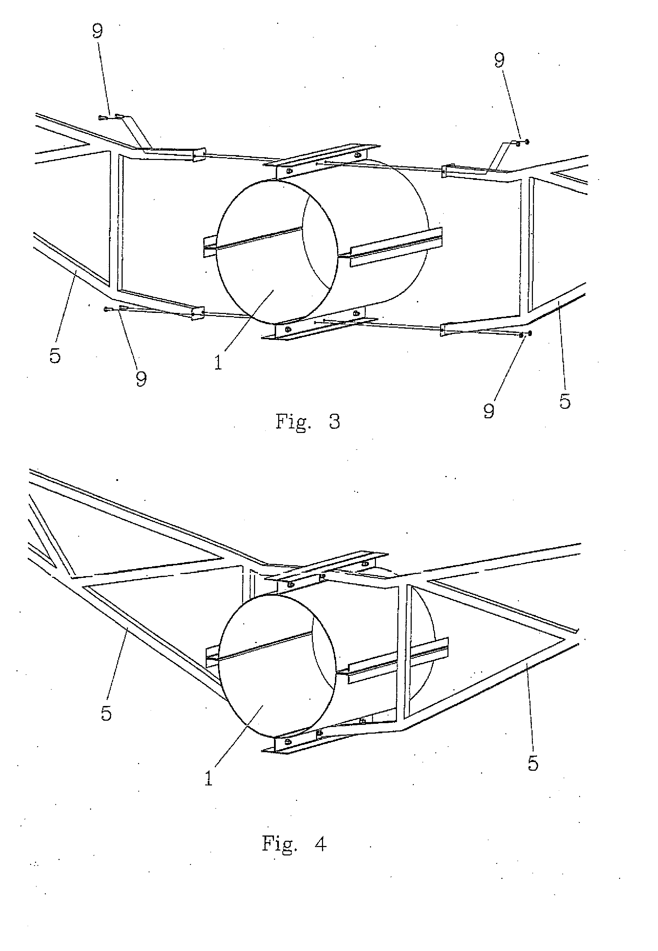

Figures 2, 3 and 4 depict in a simplified manner the sequence for assembling a unitary portion of the beam-arms assembly which is identically repeated throughout the entire collector. In this example the attachment is achieved by means of nuts and screws.
Figure 5 shows another possible embodiment in which the beam is formed by 2 half-profiles.
Figure 6 shows a frame of about 12 meters in length with the mirrors assembled.

## Claims

1. Beam (1) of the frame of a cylindrical parabolic solar collector, **characterized by** being cylindrical, hollow and having a circular cross-section; formed by two or more profile parts or portions (2), with a length equal to that of the beam, with a cross-section in the form of a circular sector with an angle equal to the full angle divided by the number of parts forming the beam, with flanges (3) having a planar area of radial direction at the two angle ends of the circular sector; the flanges have made therein holes (10 and 11) which coincide when they face one another, to allow the assembly of through elements. Said profile portions are made of sheet metal and are attached to one another by contacting the flanges such that a closed profile is formed, thereby forming a full beam.

2. Beam of claim 1, **characterized by** having an elliptical, approximately elliptical, oval or flattened circumferential cross-section.

3. Beam of claim 1, **characterized by** having a polygonal cross-section.

4. Beam of any of claims 1, 2 and 3, **characterized in that** the flanges have a substantially planar extension (4) in a direction approximately perpendicular to the flange, with the function of increasing the bending strength of the beam and/or serving as a support for other elements.

5. Beam of any of claims 1-4, formed by 2 profile parts or halves (8).

6. Beam of any of claims 1-4, formed by 3 profile parts or thirds.

7. Beam of any of claims 1-4, formed by 4 profile parts or quarters (2).

8. Beam of any of claims 1-7, **characterized in that** the sheet metal is galvanized.

9. Beam of any of claims 1-8, **characterized in that** the sheet metal has a thickness of 2.5 to 8 millimeters.

10. Beam of any of claims 1-9, **characterized in that** the profile portions are attached by means of screws and nuts (6).

11. Beam of any of claims 1-9, **characterized in that** the profile portions are attached by means of rivets.

12. Beam of any of claims 1-9, **characterized in that** the profile portions are attached by means of clinches.

13. Beam of any of claims 1-9, **characterized in that** the profile portions are attached by means of welding.

14. Cylindrical parabolic solar collector, in the frame of which there is at least one central body, beam or torque tube according to any of claims 1-13.

15. Manner of securing the arms (5) for supporting the mirrors (7) to the beam (1) of any of claims 1-13, **characterized in that** the assembly is carried out on the flanges (3), in which the holes serving for the passage of the securing elements (9) for securing the arms to the beam are made.

16. Manner of claim 15, wherein the arms (5) are furthermore secured to one another in pairs, and in turn to the beam (1) with the intermediation of the flanges (3) to which they are secured; the arms of each pair being arranged symmetrically with respect to said flanges and sharing securing elements (9).

17. Cylindrical parabolic solar collector according to claim 14, **characterized in that** it furthermore has at least one arm secured in the manner of any of claims 15 and 16.

18. Process for manufacturing the profile portions (2) forming a beam according to claims 1-13, **characterized in that**:
a. It starts from a strip of sheet metal with a width equal to the length of the neutral fiber of the profile portion to be manufactured.
b. A profiling machine, also known as a cold profile forming machine, wherein the roller trains give the design shape to the profile portion, is fed with the mentioned strip.

19. Process of claim 18, **characterized in that** furthermore the holes necessary for the assembly of the beam and the assembly of the arms are punched, before profiling.

20. Process of claim 18, **characterized in that** furthermore the holes necessary for the assembly of the beam and the assembly of the arms are punched, after profiling.

21. Process of any of claims 18, 19 and 20, **characterized in that** furthermore, prior to its entrance in the profiling machine, the sheet metal is cut such that rectangles with a length equal to the length of the profile to be manufactured are obtained.

22. Process of any of claims 18, 19 and 20, **characterized in that** furthermore, at the exit from the profiling machine, the obtained profiles are cut to the design length.

23. Cylindrical parabolic solar collector, **characterized in that** the central body, beam or torque tube of its frame has in its main composition at least one part manufactured according to the process of any of claims 18-22.

24. Cylindrical parabolic solar collector, **characterized in that** its frame is according to any of claims 14, 17 and 23 and **in that** the arms are formed by welded structural portions subjected to an electrolytic process for protection against corrosion.

25. Cylindrical parabolic solar collector, **characterized in that** its frame is according to any of claims 14, 17 and 23 and **in that** the arms are formed mainly by press-formed sheet metal.

26. Cylindrical parabolic solar collector, **characterized in that** its frame is according to any of claims 14 and 23 and **in that** the support of the mirrors is a spatial substructure in substitution of the arms mentioned in the present claims.
